# EUROPEAN PATENT APPLICATION

(11) **EP 4 524 002 A1**
(43) Date of publication of application: **19.03.2025**
(21) Application number: 24196313.1
(22) Date of filing: 23.08.2024
(51) Int. Cl.: B62D 25/08, B60R 19/12, B62D 21/15

(54) **VEHICLE STRUCTURE**

(30) Priority: 15.09.2023 JP 2023150384; 29.03.2024 JP 2024057049
(71) Applicant: Suzuki Motor Corporation, Shizuoka 432-8611 (JP)
(72) Inventor: TAKANO, Yuji, HAMAMATSU-SHI, 432-8611 (JP)
(74) Representative: Plasseraud IP

(57) **Abstract**

[Problem to be Solved]

It is possible to efficiently absorb impact energy and improve protection performance of a sensor device.

[Solution]

A vehicle structure 1 includes an outer panel 10 that forms a design surface of an outside of a vehicle in a front part or a rear part of the vehicle, a reinforcement member 20 that reinforces the outer panel 10 from a back surface side of the outer panel 10, a sensor device S that is attached to the reinforcement member 20 and senses an outside-vehicle environment, a vehicle body structure 30 that is provided on the back surface side of the outer panel 10 and extends in a vehicle width direction, and a low-rigidity member 40 that is arranged in a periphery of the reinforcement member 20 and has a rigidity lower than a rigidity of the vehicle body structure 30. The low-rigidity member 40 has a facing part 41. The facing part 41 is arranged in a state of being in contact with or having a predetermined gap from a predetermined vehicle inner side portion 24 facing the inward side of the vehicle in the vehicle front-rear direction in the reinforcement member 20. The facing part 41 is arranged at a position offset with respect to the sensor device S in at least one of a vehicle up-down direction and a vehicle width direction.

## Description

### [Technical Field]

The present invention relates to a vehicle structure including a structure for arranging a sensor device in a front part or a rear part of a vehicle.

### [Background Art]

In general, an outer panel (also referred to as an exterior member) such as a bumper or a grille that forms a design surface on the outside of a vehicle is provided in a front part or a rear part of the vehicle such as an automobile, and a sensor device that senses (detects) an outside-vehicle environment using a camera, a radar, ultrasound, or the like is arranged on a back surface side of the outer panel in some cases.

A structure disclosed in Patent Literature 1 is known as an example of a vehicle structure having a structure for arranging a sensor device in a front part of a vehicle. The structure disclosed in Patent Literature 1 includes a bumper beam and an upper bar that are arranged in the front part of the vehicle to be spaced apart from each other in an up-down direction, and a bracket that extends from the bumper beam to the upper bar and supports a radar device, and the bracket is provided with deformation inducing parts that induce deformation due to an impact received at the time of a front collision of the vehicle. Then, in the structure disclosed in Patent Literature 1, the bracket is deformed or fractured at the deformation inducing parts in the event of a collision, so that the impact may be absorbed.

### [Citation List]

### [Patent Literature]

[Patent Literature 1] JP 2017-215186 A

### [Summary of Invention]

### [Problem to be Solved by the Invention]

However, in the structure of Patent Literature 1, since the bracket is provided with the deformation inducing parts in the vicinity of the radar device, the bracket is forced backwards from the vicinity of the radar device when an impact is applied to the bracket. As a result, a portion in the bracket and in the vicinity of the radar device contacts a member located at the rear of the bracket, making it likely that the radar device will be damaged.

An object of the present invention is to provide a vehicle structure which makes it possible to efficiently absorb impact energy and improve protection performance of a sensor device.

### [Means for Solving the Problems]

In order to achieve the object, one aspect of the present invention provides a vehicle structure including: an outer panel that forms a design surface of an outside of a vehicle in a front part or a rear part of the vehicle; a reinforcement member that reinforces the outer panel from a back surface side of the outer panel; a sensor device that is attached to the reinforcement member and senses (detects) an outside-vehicle environment; and a vehicle body structure that is provided on the back surface side of the outer panel and extends in a vehicle width direction, wherein the vehicle structure includes a low-rigidity member that is arranged in a periphery of the reinforcement member and has a rigidity lower than a rigidity of the vehicle body structure, the low-rigidity member has a facing part that is arranged in a state of being in contact with or having a predetermined gap from a reinforcement-member back surface of the reinforcement member, which is a surface on an inward side of the vehicle in a vehicle front-rear direction, and the facing part is arranged at a position offset with respect to the sensor device in at least one of a vehicle up-down direction and a vehicle width direction.

### [Advantageous Effects of Invention]

According to the one aspect of the present invention, it is possible to provide the vehicle structure which makes it possible to efficiently absorb the impact energy and improve the protection performance of the sensor device.

### [Brief Description of Drawings]

[Figure 1] Figure 1 is a perspective view of a vehicle structure according to an embodiment of the present invention.
[Figure 2] Figure 2 is a perspective view for explaining a main part of the vehicle structure.
[Figure 3] Figure 3 is a top view of the main part of the vehicle structure.
[Figure 4] Figure 4 is a perspective view of the vehicle structure in a state in which an outer panel and a low-rigidity member are removed.
[Figure 5] Figure 5 is a side view of the vehicle structure in a state in which the outer panel and the low-rigidity member are removed.
[Figure 6] Figure 6 is a perspective view of a vehicle body structure.
[Figure 7] Figure 7 is another perspective view for explaining the main part of the vehicle structure.
[Figure 8] Figure 8 is a perspective view of a cutaway model of the main part of the vehicle structure taken along line A-A illustrated in Figure 3.
[Figure 9] Figure 9 is a sectional view of the main part of the vehicle structure taken along line B-B illustrated in Figure 3.
[Figure 10] Figure 10 is an enlarged view of the main part for explaining a front-rear positional relationship among elements.

### [Mode for Carrying Out the Invention]

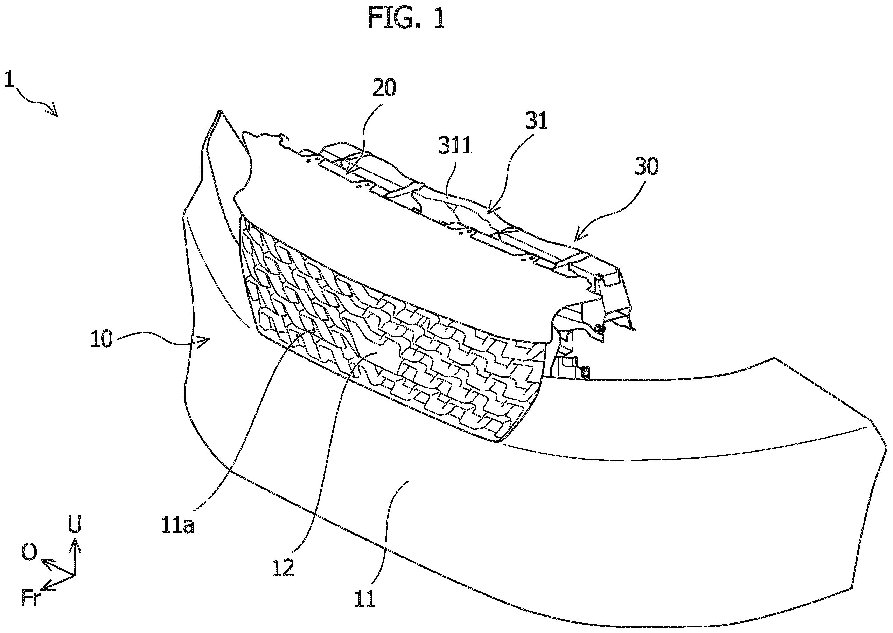

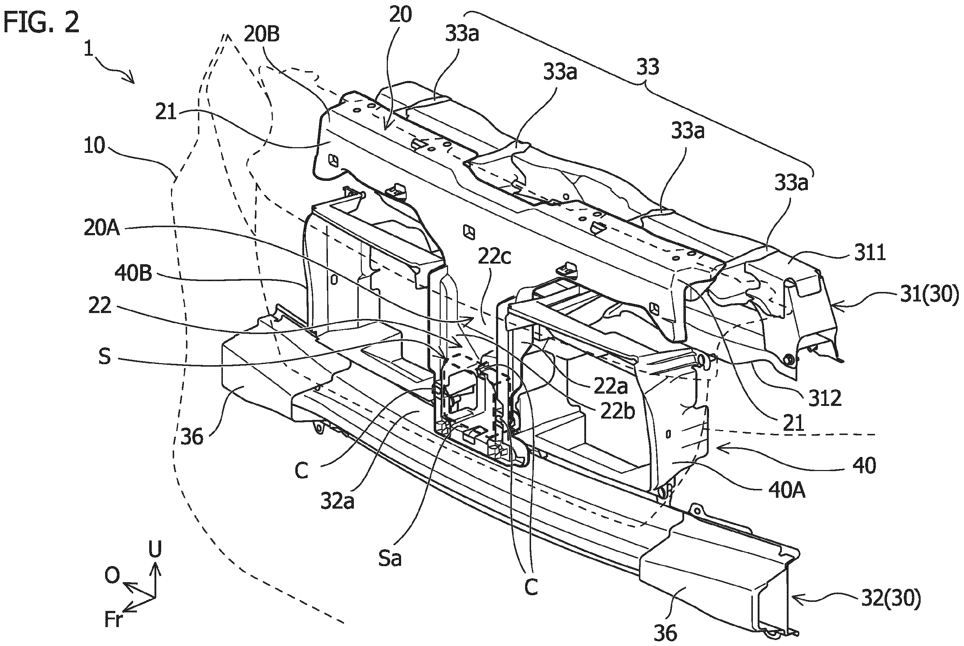

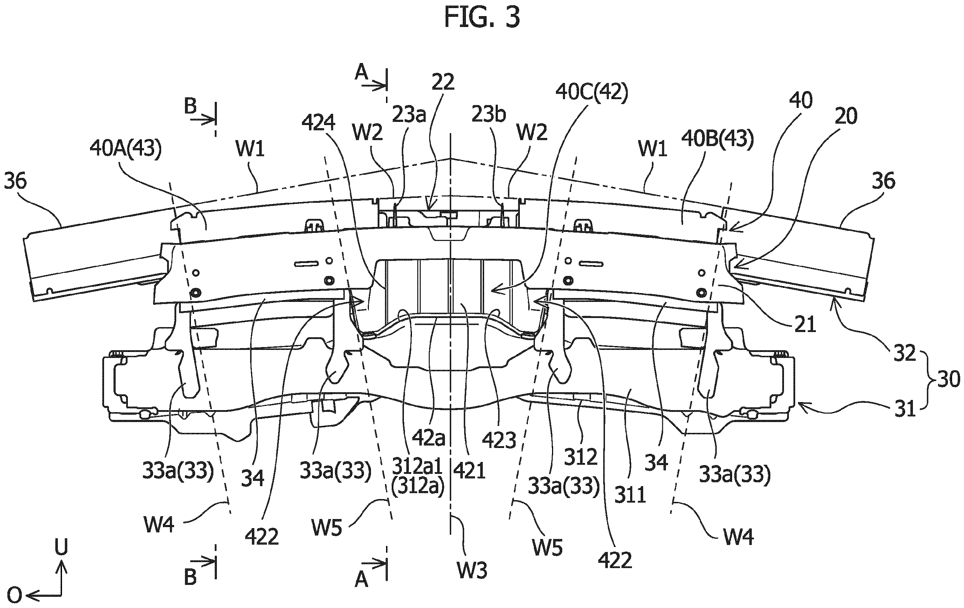

Hereinafter, embodiments of the present invention will be described with reference to the accompanying drawings. Figure 1 is a perspective view of a vehicle structure 1 according to one embodiment of the present invention when seen from a front side of a vehicle, and Figures 2 and 3 are diagrams for explaining a main part of the vehicle structure 1, in which Figure 2 is a perspective view and Figure 3 is a top view. Note that, in each drawing, an arrow Fr direction indicates a forward direction of the vehicle in a vehicle front-rear direction, an arrow O direction indicates an outward direction of the vehicle in a vehicle width direction (outside in the vehicle width direction), and an arrow U direction indicates an upward direction of the vehicle in a vehicle up-down direction. In the following description, the terms "front" and "rear" correspond to front and rear in the vehicle front-rear direction, respectively, and the terms "up" and "down" correspond to up and down in the vehicle up-down direction, respectively. The terms "left" and "right" correspond to left and right in the vehicle width direction, respectively, when seen from the vehicle front side toward the vehicle rear side.

### (Outline of Vehicle Structure)

The vehicle structure 1 includes a structure for arranging a sensor device S that senses (detects) an outside-vehicle environment, on a back surface side of an outer panel 10 in a front part or a rear part of a vehicle. In the present embodiment, the vehicle structure 1 also includes a structure for reinforcing the outer panel 10 and attaching (fixing) the outer panel 10 to the vehicle body side. In the present embodiment, the vehicle structure 1 is applied as a front structure of the vehicle.

Referring to Figures 1 to 3, in the present embodiment, the vehicle structure 1 includes the outer panel 10, a reinforcement member 20, a sensor device S, a vehicle body structure 30, and a low-rigidity member 40. Note that in Figure 2, an exterior shape of the sensor device S and an exterior shape of the outer panel 10 are indicated by broken lines, and in Figure 3, the outer panel 10 is not illustrated.

The outer panel 10 is a so-called exterior member that forms a design surface of the outside of the vehicle in the front part or the rear part of the vehicle and extends in the vehicle width direction. In the present embodiment, the outer panel 10 is a front bumper that forms an outside design surface in the front part of the vehicle. The outer panel 10 which is a front bumper has, for example, a bumper front surface 11 extending entirely in the vehicle width direction. A front grille 11a made of plastic material is provided at a center of the bumper front surface 11, and a plurality of vents are open in the front grille 11a. That is, the outer panel 10 includes the front grille 11a which is an air intake member. Although not illustrated, in the present embodiment, a radiator is arranged at the rear of the outer panel 10 and the reinforcement member 20.

The reinforcement member 20 is a member for reinforcing the outer panel 10 from the back surface side of the outer panel 10 (i.e., a surface side opposite to the design surface of the outside of the vehicle) and fixing the outer panel 10 to the vehicle body (vehicle body structure 30). The reinforcement member 20 is, for example, an injection molded plastic member. The reinforcement member 20 is generally arranged along a center in the vehicle width direction of the back surface of the outer panel 10. Since the outer panel 10 is a large member that is thin and extends over a wide area in the vehicle width direction, the rigidity of the outer panel 10 is relatively low. In order to reinforce the low-rigidity outer panel 10, the reinforcement member 20 supports the outer panel 10 from the back surface of the outer panel 10 at a plurality of points. The reinforcement member 20 is coupled (fixed) to the vehicle body (vehicle body structure 30) at a plurality of points as described later, and is supported by the vehicle body structure 30 (first vehicle body structural member 31 and a second vehicle body structural member 32 described later in detail). The reinforcement member 20 is coupled (fixed) to the back surface of the outer panel 10 at the plurality of points, so that the outer panel 10 is supported from the back surface side. The structure of the reinforcement member 20 will be described later.

The sensor device S is a device that is attached to the reinforcement member 20 and senses the outside-vehicle environment. In the present embodiment, the sensor device S is a device configured to sense an obstacle (obstacle outside the vehicle) such as another vehicle located in front of the vehicle using electromagnetic waves. In the present embodiment, the sensor device S uses millimeter waves as the electromagnetic waves. That is, the sensor device S is a millimeter wave radar. The electromagnetic waves used by the sensor device S is not limited to the millimeter waves, and may be, for example, microwaves.

The sensor device S has a sensor end surface Sa located at a leading end on the outward side of the vehicle in the vehicle front-rear direction in the sensor device S. In the present embodiment, the sensor end surface Sa is a front end surface of the sensor device S. To be specific, the sensor end surface Sa is an end surface that faces the outward side of the vehicle in the vehicle front-rear direction (here, the forward direction of the vehicle) and from or to which the electromagnetic waves are output or input. At the rear of the outer panel 10 and the front grille 11a, the sensor device S is attached, via a coupling member such as a sensor support plate or a bolt (not illustrated), generally to a center lower portion in the vehicle width direction of the reinforcement member 20 in a state in which the sensor end surface Sa faces the forward direction of the vehicle, and is fixed to the reinforcement member 20. In this state, the sensor device S faces the back surface of the outer panel 10 in the front-rear direction. A region (portion) in the outer panel 10 that faces the sensor device S is formed using a material (e.g., a synthetic resin) that allows the electromagnetic waves to pass through, and is formed into a flat plate shape as a sensing wave passing region 12 (electromagnetic wave passing part).

The sensor device S outputs electromagnetic waves, and the output electromagnetic waves pass through the sensing wave passing region 12 of the outer panel 10 to be output in the forward direction of the vehicle. Then, if an obstacle is present in front of the vehicle, the electromagnetic waves output in the forward direction of the vehicle is reflected by the obstacle, and the sensor device S receives the electromagnetic waves that have been reflected by the obstacle and have passed through the sensing wave passing region 12 to thereby sense the obstacle in front of the vehicle.

The vehicle body structure 30 is provided on the back surface side of the outer panel 10 and extends in the vehicle width direction. The vehicle body structure 30 is formed by a high-rigidity member forming a part of the vehicle body. The vehicle front part is provided with the first vehicle body structural member 31 and the second vehicle body structural member 32 and the like as the vehicle body structure 30. That is, each element (31, 32) forms a part of the vehicle body structure 30 of the vehicle. Each element (31, 32) includes a thin metal plate and the like.

The low-rigidity member 40 is a member that is arranged in the periphery of the reinforcement member 20 and has a rigidity lower than the rigidity of the vehicle body structure 30. The low-rigidity member 40 is, for example, an injection molded plastic member. The low-rigidity member 40 is arranged between the radiator and the reinforcement member 20. The low-rigidity member 40 is, for example, an air guiding member such as a shroud that retains the radiator and forms an air intake path. The air that has passed through the plurality of vents in the front grilles 11a is guided to the radiator via the low-rigidity member 40 serving as the air guiding member.

### (Details of Vehicle Structure)

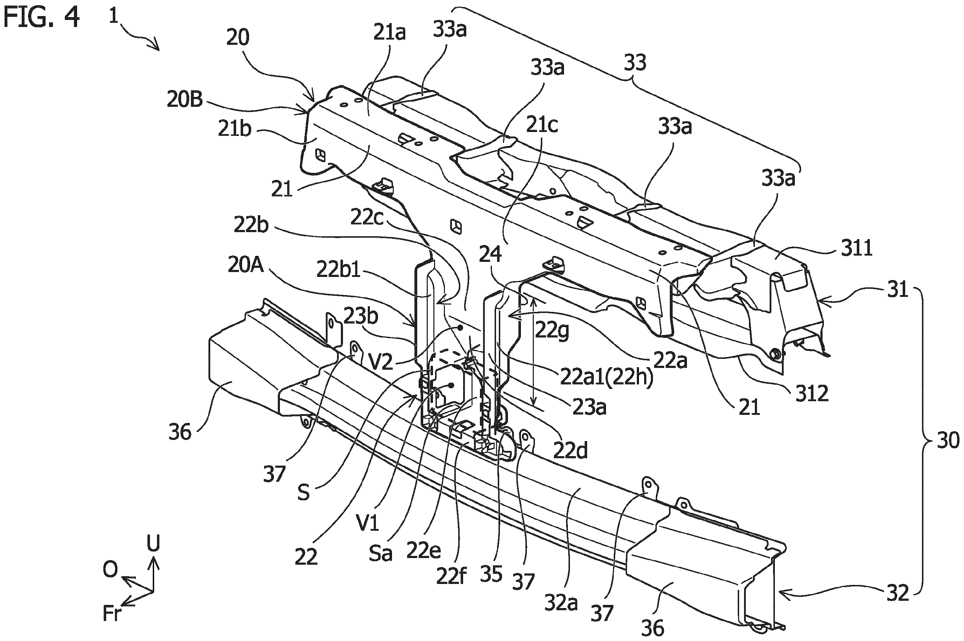

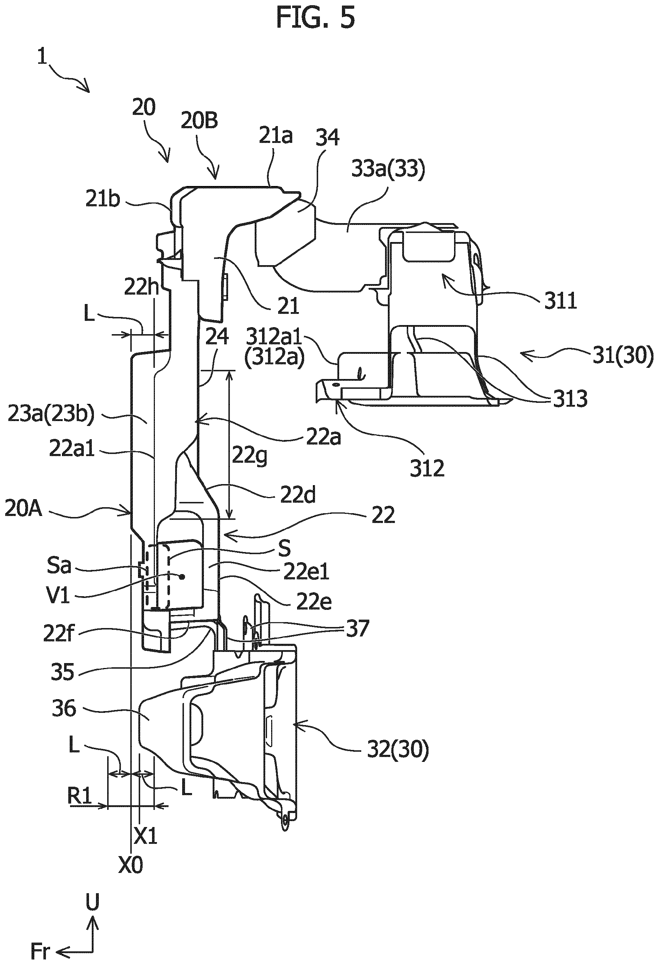

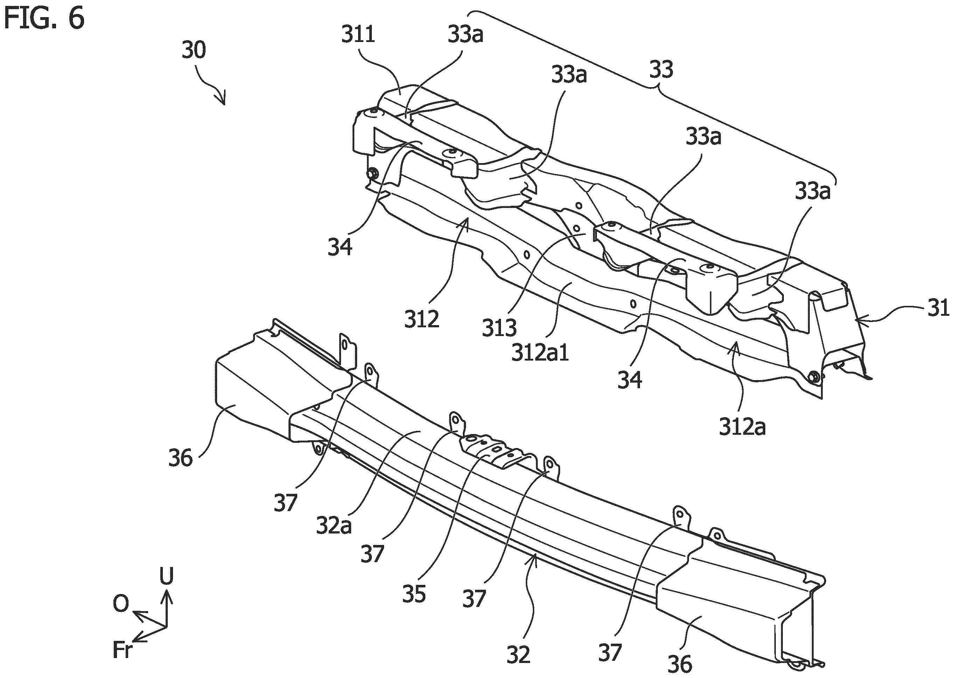

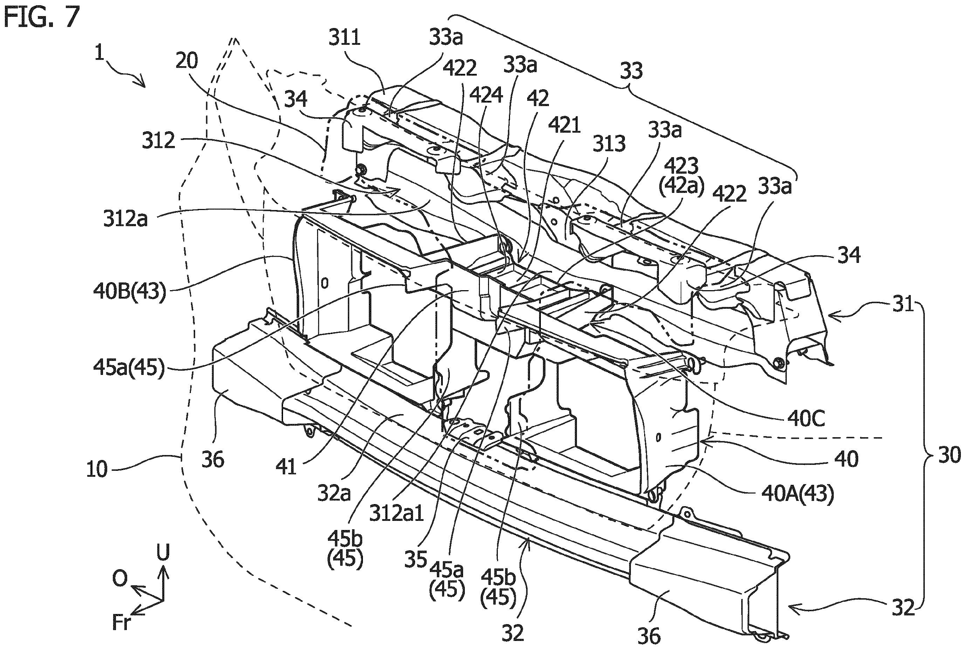

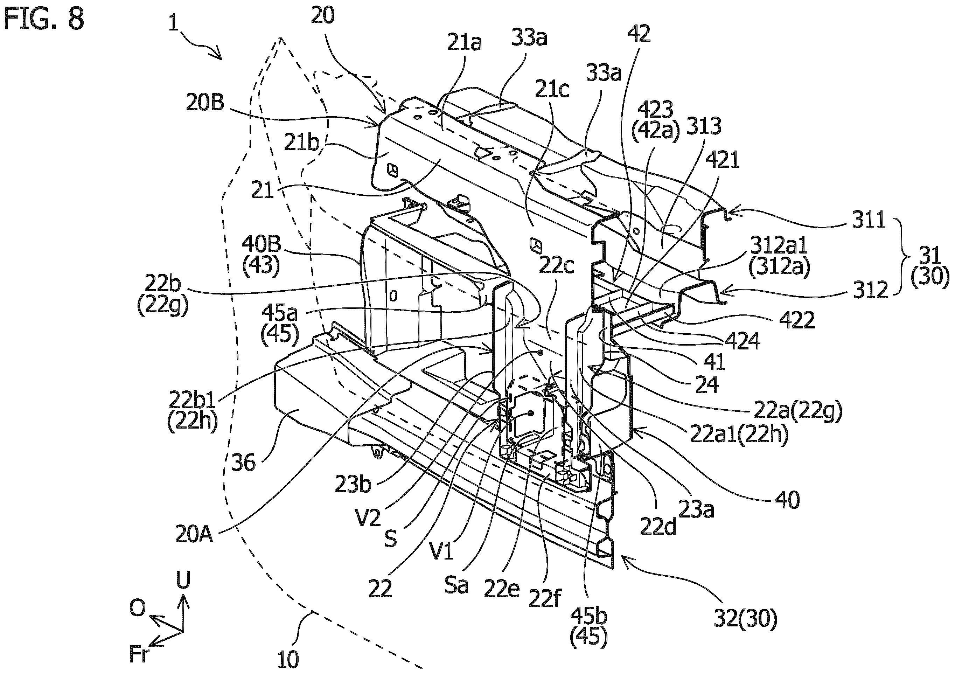

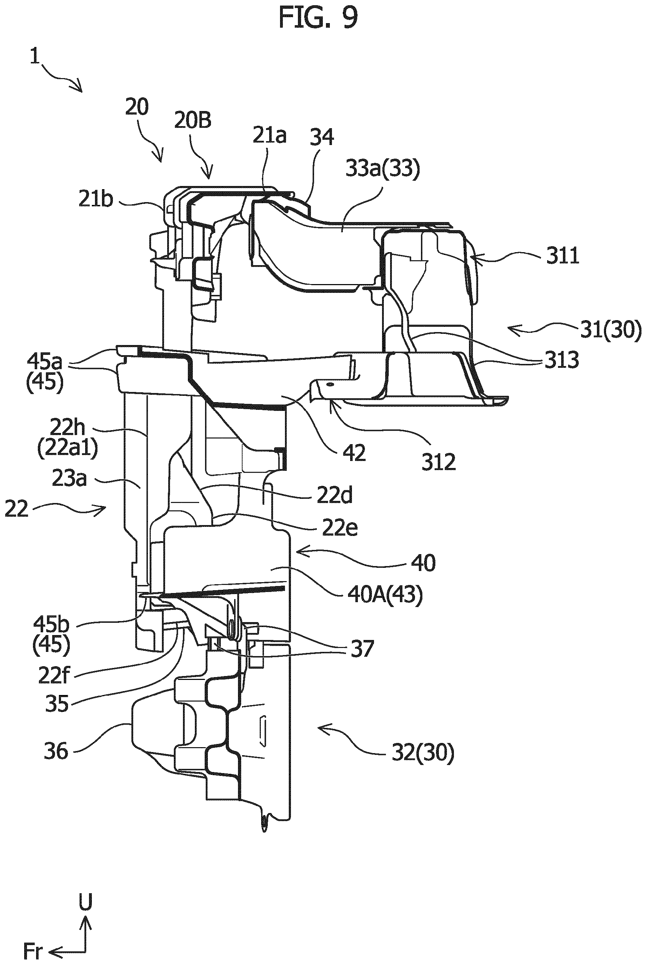

Hereinafter, the vehicle structure 1 will be described in detail with reference to Figures 1 to 9. Figures 4 and 5 are diagrams for explaining the vehicle structure 1 in a state in which the outer panel 10 and the low-rigidity member 40 are removed, in which Figure 4 is a perspective view and Figure 5 is a side view. Figure 6 is a perspective view of the vehicle body structure 30, and Figure 7 is another perspective view for explaining the main part of the vehicle structure 1. Figure 8 is a perspective view of a cutaway model of the main part of the vehicle structure 1 taken along line A-A illustrated in Figure 3, and Figure 9 is a sectional view of the main part of the vehicle structure 1 taken along line B-B illustrated in Figure 3. Note that in Figure 7, an exterior shape of the outer panel 10 is indicated by a broken line, and an exterior shape of the reinforcement member 20 is indicated by a dash-double-dot line.

Referring to Figures 2 to 5, the reinforcement member 20 is arranged on the back surface side of the outer panel 10, and includes a vertical extension part 20A and a transverse extension part 20B. The reinforcement member 20 is formed substantially into a T-shape in planar view seen from the vehicle front-rear direction.

The vertical extension part 20A extends in the vehicle up-down direction. The transverse extension part 20B extends in the vehicle width direction. The transverse extension part 20B includes, on both sides in the vehicle width direction, projecting parts 21 projecting from one end side in the vehicle up-down direction of the vertical extension part 20A toward the outside in the vehicle width direction. In the present embodiment, the projecting parts 21 of the transverse extension part 20B project from an upper end side of the vertical extension part 20A. That is, in the present embodiment, "one side" in the vehicle up-down direction of the vertical extension part 20A from which the projecting parts 21 project corresponds to an upper side, and the transverse extension part 20B is located on the upper side of the vertical extension part 20A. In the present embodiment, "one side" in the vehicle up-down direction corresponds to an upper side, and "the other side" in the vehicle up-down direction corresponds to a lower side.

In a side view, the reinforcement member 20 projects from the first vehicle body structural member 31 toward the outward side of the vehicle in the vehicle front-rear direction (here, in the forward direction), and then is bent so as to extend to the other side in the vehicle up-down direction (i.e., in the downward direction) toward the second vehicle body structural member 32. That is, in the illustrated example, the transverse extension part 20B has a substantially L-shaped cross section and extends in the vehicle width direction, and the vertical extension part 20A forms a portion including a lower portion of the reinforcement member 20 and extends in the vehicle up-down direction. The reinforcement member 20 is formed generally along the bumper front surface 11 at the center in the vehicle width direction of the back surface of the outer panel 10.

In the present embodiment, the reinforcement member 20 includes a containing part (housing part) 22 in which the sensor device S is contained (housed). The containing part 22 is formed in a recessed shape that is recessed toward the inward side of the vehicle in the vehicle front-rear direction (here, in the rearward direction). In other words, the containing part 22 has the recessed shape that is open toward the outward side of the vehicle in the vehicle front-rear direction (in the forward direction), so that a containing space in which the sensor device S is contained is formed inside the recessed shape. For that matter, the containing part 22 is formed, as a whole, in the recessed shape that bulges generally in the vehicle rearward direction. The containing part 22 is provided in the vertical extension part 20A. In the present embodiment, the containing part 22 is provided in a portion (i.e., a lower portion) on the other side (i.e., on the lower side) in the vehicle up-down direction of the vertical extension part 20A.

In the present embodiment, the vehicle body structure 30 includes the first vehicle body structural member 31 and the second vehicle body structural member 32 as described above. The first vehicle body structural member 31 and the second vehicle body structural member 32 are spaced apart from each other in the vehicle up-down direction in the vehicle front part, and each of the first vehicle body structural member 31 and the second vehicle body structural member 32 extends in the vehicle width direction.

In the present embodiment, the first vehicle body structural member 31 is arranged on one side (i.e., on the upper side) in the vehicle up-down direction to be spaced apart from the second vehicle body structural member 32, and is referred to as an upper cross member or an upper bumper beam. The first vehicle body structural member 31 is also a hood lock member as a structural member that receives the front part of a front hood (not illustrated). Each end of the first vehicle body structural member 31 is joined to another member (not illustrated) of the vehicle body. The second vehicle body structural member 32 is arranged on the other side (i.e., on the lower side) in the vehicle up-down direction to be spaced apart from the first vehicle body structural member 31, and is referred to as a lower cross member or a lower bumper beam. Each end of the second vehicle body structural member 32 is joined to another member (e.g., a front side member) (not illustrated) of the vehicle body.

In the present embodiment, the second vehicle body structural member 32 is provided at a position offset toward the outward side of the vehicle (here, in the forward direction) with respect to the first vehicle body structural member 31 in the vehicle front-rear direction. That is, the second vehicle body structural member 32 is located in front of and on the lower side of the first vehicle body structural member 31.

Referring to Figures 2, 4, and 5, the reinforcement member 20 is connected to and supported by the first vehicle body structural member 31 and the second vehicle body structural member 32 that are spaced apart from each other in the vehicle up-down direction in the front part of the vehicle. In other words, the reinforcement member 20 is a member that extends from the first vehicle body structural member 31 to the second vehicle body structural member 32 and connects the first vehicle body structural member 31 and the second vehicle body structural member 32.

An upper portion of the reinforcement member 20 is coupled to (supported by) the first vehicle body structural member 31 at a plurality of positions (two positions on one side in the drawings) of the projecting parts 21 provided on both sides in the vehicle width direction. A lower portion of the reinforcement member 20 is coupled to (supported by) the second vehicle body structural member 32 using the containing part 22 (a second front and rear wall 22f described later in detail).

In the present embodiment, the reinforcement member 20 is coupled to the outer panel 10 at each of upper walls 21a of the projecting parts 21, front walls 21b of the projecting parts 21, a front wall 21c at the center in the vehicle width direction of the transverse extension part 20B, and the second front and rear wall 22f of the containing part 22 of the vertical extension part 20A. At each coupling position, an appropriate form of coupling structure such as bolt fastening with a coupling member such as a bolt, engaging an engaging claw with an engaging hole, and fixing with a clip is applied.

Referring to Figures 2 to 6, in the present embodiment, the first vehicle body structural member 31 includes a first upper cross member 311, and a first lower cross member 312 that is arranged on the lower side of the first upper cross member 311 in the vehicle up-down direction. The first upper cross member 311 and the first lower cross member 312 are coupled to each other, and extend while having approximately the same length in the vehicle width direction. The reinforcement member 20 is coupled to and supported by the first upper cross member 311 with respect to the first vehicle body structural member 31.

In the present embodiment, the first upper cross member 311 extends generally in the vehicle width direction while having a substantially groove-shaped cross section protruding upward (being open downward). In the illustrated example, the first upper cross member 311 is bent so that the center in the vehicle width direction of the first upper cross member 311 is offset toward the rear side with respect to both-side portions in the vehicle width direction.

In the present embodiment, the first lower cross member 312 includes a vertical wall 312a that faces the outward side of the vehicle in the vehicle front-rear direction and extends in the vehicle width direction. The vertical wall 312a includes, at a center in the vehicle width direction of the vertical wall 312a, a bulging vertical wall 312a1 that bulges toward the outward side of the vehicle in the vehicle front-rear direction. In the illustrated example, the first lower cross member 312 extends in the vehicle width direction while having a substantially hat-shaped cross section protruding upward. The first lower cross member 312 is bent so that the center in the vehicle width direction of the first lower cross member 312 is offset toward the front side with respect to both-side portions in the vehicle width direction. In the hat-shaped cross section of the first lower cross member 312, a portion facing the forward direction forms the vertical wall 312a, and the center in the vehicle width direction of the vertical wall 312a is formed to bulge rearward, so that the bulging vertical wall 312a1 is formed.

In the present embodiment, the vehicle structure 1 includes cross member coupling parts 313 that couple the first upper cross member 311 and the first lower cross member 312. The cross member coupling parts 313 extend downward from three points of the center in the vehicle width direction and both-side portions in the vehicle width direction of the first upper cross member 311. The cross member coupling part 313 at the center in the vehicle width direction extends from a front wall of the first upper cross member 311 to a vertical wall on the rear side of the center in the vehicle width direction of the first lower cross member 312, and is joined to the vertical wall. Each of the cross member coupling parts 313 at both side portions in the vehicle width direction extends from a rear wall of the first upper cross member 311 to a vertical wall on the rear side of an outer portion in the vehicle width direction of the first lower cross member 312, and is joined to the vertical wall.

In the present embodiment, the first vehicle body structural member 31 is provided with an inner impact absorbing part 33 that protrudes from the first vehicle body structural member 31 toward the outward side of the vehicle in the vehicle front-rear direction and is formed to have a rigidity lower than the rigidity of the first vehicle body structural member 31. The projecting parts 21 of the transverse extension part 20B are coupled to and supported by the first vehicle body structural member 31 via the inner impact absorbing part 33.

The inner impact absorbing part 33 includes at least two impact absorbing pieces 33a that are spaced apart from each other in the vehicle width direction on each of the one side in the vehicle width direction and the other side in the vehicle width direction. The at least two impact absorbing pieces 33a are coupled by a coupling stay 34.

In the illustrated example, the two impact absorbing pieces 33a are provided on each of one side in the vehicle width direction and the other side in the vehicle width direction, and therefore, the inner impact absorbing part 33 includes four impact absorbing pieces 33a. The impact absorbing piece 33a is a member formed by bending a thin metal plate. The impact absorbing piece 33a extends to protrude forward from a portion corresponding to the projecting part 21 in the first upper cross member 311. The impact absorbing piece 33a (the inner impact absorbing part 33) is a member (upper bracket, and for that matter, an upper support bracket) formed to be physically separated from the first vehicle body structural member 31. A base end of the impact absorbing piece 33a is joined to the front surface and the upper surface of the first upper cross member 311.

The coupling stay 34 is provided for each of the two impact absorbing pieces 33a on one side in the vehicle width direction and the two impact absorbing pieces 33a on the other side in the vehicle width direction. The coupling stay 34 is a member formed by bending a thin metal plate, and extends in the vehicle width direction. The coupling stay 34 extends in the vehicle width direction so as to span the leading ends of the two impact absorbing pieces 33a, and connects the leading ends of the two impact absorbing pieces 33a to each other.

In the present embodiment, the second vehicle body structural member 32 is provided with a support bracket 35 that protrudes in the upward direction of the vehicle from the second vehicle body structural member 32 and is formed to have a rigidity lower than the rigidity of the second vehicle body structural member. The support bracket 35 supports the lower portion (here, the containing part 22) of the reinforcement member 20 from the lower side. The containing part 22 of the vertical extension part 20A is coupled to and supported by the second vehicle body structural member 32 via the support bracket 35.

The support bracket 35 is a member formed by bending a thin metal plate. That is, in the present embodiment, the support bracket 35 is a member (lower bracket, and for that matter, a lower support bracket) formed to be physically separated from the second vehicle body structural member 32. The support bracket 35 is joined to the second vehicle body structural member 32.

The upper portion of the reinforcement member 20 is coupled to the first vehicle body structural member 31 by coupling the projecting parts 21 of the transverse extension part 20B to the upper surfaces of the coupling stays 34 by the coupling members such as bolts, and the lower portion of the reinforcement member 20 is coupled to (supported by) the second vehicle body structural member 32 by being engaged with the support bracket 35 at the containing part 22 (second front and rear wall 22f described later) of the vertical extension part 20A.

In the present embodiment, the vehicle body structure 30 is provided with a panel impact absorbing part 36 that protrudes from the vehicle body structure 30 toward the outward side of the vehicle (in the forward direction) in the vehicle front-rear direction and is formed to have a rigidity lower than the rigidity of the vehicle body structure 30. In the illustrated example, the panel impact absorbing part 36 is provided in the second vehicle body structural member 32.

To be specific, the panel impact absorbing part 36 is a member formed by bending a thin metal plate. The panel impact absorbing part 36 is provided for each of both side in the vehicle width direction in the front surface of the second vehicle body structural member 32. The panel impact absorbing part 36 is a member formed to be physically separated from the second vehicle body structural member 32. A base end of the panel impact absorbing part 36 is joined to the front surface of the second vehicle body structural member 32.

In the present embodiment, the second vehicle body structural member 32 is provided with a protruding bracket 37 that protrudes upward from the second vehicle body structural member 32 and is formed to have a rigidity lower than the rigidity of the second vehicle body structural member 32.

To be specific, the protruding brackets 37 are provided at a plurality of positions (six positions in the illustrated example) that are spaced apart from each other in the vehicle width direction in an upper portion 32a of the second vehicle body structural member 32. Each of the protruding brackets 37 is a member formed of a thin metal plate. In the present embodiment, each of the protruding brackets 37 is a member formed to be physically separated from the second vehicle body structural member 32. The protruding brackets 37 are joined to the second vehicle body structural member 32.

Next, the shape, structure and the like of the reinforcement member 20 will be described in more detail.

The containing part 22 includes a first vertical side part 22a, a second vertical side part 22b, an upper connecting wall 22c, a first front and rear wall 22d, a bottom wall 22e, and the second front and rear wall 22f, and the containing space is defined by these elements.

The first vertical side part 22a is a side part on one side in the vehicle width direction of the containing part 22, and the second vertical side part 22b is a side part on the other side in the vehicle width direction of the containing part 22. The first vertical side part 22a and the second vertical side part 22b each extend generally in the vehicle up-down direction. The first vertical side part 22a and the second vertical side part 22b are portions by which the sensor device S is positioned to be attached.

Each of the upper portion of the first vertical side part 22a and the upper portion of the second vertical side part 22b is formed into a shape having a bulging part 22g (bulging structure) bulging toward the outward side of the vehicle (in the forward direction of the vehicle) in the vehicle front-rear direction.

The first vertical side part 22a has a first end wall 22a1 facing the outward side of the vehicle in the vehicle front-rear direction (forward direction of the vehicle). The first end wall 22a1 extends from one end of the upper connecting wall 22c to one end of the second front and rear wall 22f.

In similar fashion, the second vertical side part 22b has a second end wall 22b 1 facing the outward side of the vehicle in the vehicle front-rear direction (forward direction of the vehicle). The second end wall 22b1 extends from the other end of the upper connecting wall 22c to the other end of the second front and rear wall 22f.

The upper connecting wall 22c connects the upper portion of the first vertical side part 22a and the upper portion of the second vertical side part 22b.

The first front and rear wall 22d extends from the first vertical side part 22a and the second vertical side part 22b toward the inward side of the vehicle in the vehicle front-rear direction (in the rearward direction). In the illustrated example, the first front and rear wall 22d is inclined in a direction away from the outer panel 10 toward the lower side. The first front and rear wall 22d is continuous to a lower end of the upper connecting wall 22c and couples the first vertical side part 22a and the second vertical side part 22b.

The bottom wall 22e extends from an inward side end (rear end) of the first front and rear wall 22d toward the other side in the vehicle up-down direction (in the downward direction) and faces an inward side surface (rear surface) in the vehicle front-rear direction of the sensor device S. The bottom wall 22e is a wall (in the illustrated example, also referred to as a rear wall) forming a bottom of the recess in the vehicle front-rear direction in the containing part 22. Each of the first vertical side part 22a, the second vertical side part 22b, the first front and rear wall 22d and the second front and rear wall 22f is connected to a peripheral edge of the bottom wall 22e.

The second front and rear wall 22f extends from an end on the other side (lower side) in the vehicle up-down direction of the bottom wall 22e toward the outward side of the vehicle in the vehicle front-rear direction (in the forward direction). The second front and rear wall 22f connects the lower end of the first vertical side part 22a and the lower end of the second vertical side part 22b.

In the present embodiment, the containing part 22 is coupled to the vehicle body structure 30 (here, the second vehicle body structural member 32) in the second front and rear wall 22f.

The containing part 22 includes a containing part end surface 22h located at a leading end on the outward side of the vehicle in the vehicle front-rear direction in the containing part 22. In the illustrated example, the containing part end surface 22h is set on the front surfaces of the end walls (the first end wall 22a1 and the second end wall 22b1) in the first vertical side part 22a and the second vertical side part 22b.

Here, in the illustrated example, the sensor device S is arranged in a lower region V1 which is a region on the second vehicle body structural member side (lower side) in the containing space of the containing part 22. The lower region V1 is a space surrounded by a second vehicle body structural member-side portion (lower portion in the illustrated example) of the first vertical side part 22a, a second vehicle body structural member-side portion (lower portion) of the second vertical side part 22b, a second front and rear wall 22f, and a second vehicle body structural member-side portion (lower portion) of the bottom wall 22e. In other words, the lower region V1 is provided between the second vehicle body structural member-side portion of the first vertical side part 22a and the second vehicle body structural member-side portion of the second vertical side part.

In the present embodiment, the reinforcement member 20 includes, in each of the first vertical side part 22a and the second vertical side part 22b, a protruding part (23a, 23b) protruding from the end wall (the first end wall 22a1, the second end wall 22b1). Each protruding part (23a, 23b) protrudes to the outward side of the vehicle (in the forward direction) with respect to the containing part 22 in the vehicle front-rear direction. That is, the first vertical side part 22a includes the protruding part 23a projecting forward with respect to the containing part 22, and the second vertical side part 22b includes the protruding part 23b projecting forward with respect to the containing part 22.

In the present embodiment, in each of the first vertical side part 22a and the second vertical side part 22b, the protruding part (23a, 23b) is a rib formed into a thin-plate shape extending in the vehicle up-down direction. In the bulging part 22g bulging forward in the first vertical side part 22a and the second vertical side part 22b, each of the front surface of the first end wall 22a1 and the front surface of the second end wall 22b1 forms a seat surface of the protruding part (23a, 23b). The protruding part (23a, 23b) extends to the vicinity of the back surface of the outer panel 10, and the front end of the protruding part (23a, 23b) is located in the vicinity of the back surface of the outer panel 10.

In the present embodiment, the protruding part (23a, 23b) extends continuously toward the transverse extension part 20B at a height position corresponding to the region (i.e., an upper region V2) on one side (i.e., an upper side) in the vehicle up-down direction in the containing part 22. In the present embodiment, the protruding part (23a, 23b) is arranged at a position offset with respect to the sensor device S in at least one of the vehicle up-down direction and the vehicle width direction.

To be specific, the protruding part (23a, 23b) extends in the up-down direction along the end wall (the first end wall 22a1, the second end wall 22b1) at the height position corresponding to the region (upper region V2) above the sensor device S and the lower region V1 of the containing part 22. In the illustrated example, the protruding part (23a, 23b) extends to the upper end (in detail, the upper end of the vertical extension part 20A) of the vertical side part (the first vertical side part 22a, the second vertical side part 22b).

In the present embodiment, the first front and rear wall 22d extends from a portion (i.e., a portion at the height position corresponding to the upper region V2 of the containing part 22) provided with the protruding part (23a, 23b) in the first vertical side part 22a and the second vertical side part 22b toward the inward side of the vehicle in the vehicle front-rear direction (in the rearward direction). To be specific, the first front and rear wall 22d extends obliquely rearward and downward at the height position corresponding to an intermediate height position in the up-down direction of the protruding part (23a, 23b).

In the present embodiment, the sensor device S is arranged inside the containing part 22 such that the sensor end surface Sa does not protrude forward from the front end of the containing part 22 (the front surface of the first end wall 22a1 and the front surface of the second end wall 22b1) in the vehicle front-rear direction, that is, the containing part end surface 22h.

The reinforcement member 20 includes a plurality (here, three) of sensor fixing parts C for arranging the sensor device S at a predetermined position of the lower region V1. The sensor fixing parts C is provided to, for example, the first end wall 22a1, the second end wall 22b 1, and the first front and rear wall 22d. Although not illustrated, the sensor support plate is fixed to the rear surface of the sensor device S. The sensor support plate is positioned relative to the containing part 22 by the three sensor fixing parts C and is fastened to the containing part 22 by the coupling members such as a bolt, so that the sensor device S is attached to the reinforcement member 20 in the lower region V1.

In the present embodiment, a harness insertion port 22e1 is open in a portion of the bottom wall 22e (see Figure 5). Electrical wires (such as in a harness (not illustrated) to be connected to the sensor device S) are pulled out rearward of the reinforcement member 20 through the harness insertion port 22e1.

Next, the shape, structure, and the like of the low-rigidity member 40 will be described in more detail.

In the illustrated example, as the low-rigidity member 40, the air guiding member for guiding air to the radiator is used. In the illustrated example, the low-rigidity member 40 is partitioned into a first air guiding part 40A and a second air guiding part 40B that are spaced apart from each other in the vehicle width direction, and a central connection part 40C that connects the first air guiding part 40A and the second air guiding part 40B. Each of the first air guiding part 40A and the second air guiding part 40B is formed substantially into a cylindrical shape (in the illustrated example, a rectangular cylindrical shape) in planar view seen from the vehicle front-rear direction. The central connection part 40C connects the upper portion on the inside in the vehicle width direction of the first air guiding part 40A and the upper portion on the inside in the vehicle width direction of the second air guiding part 40B.

In the present embodiment, the low-rigidity member 40 is arranged to avoid the region corresponding to the sensor device S in planar view when seen from one side in the vehicle front-rear direction. In the illustrated example, the low-rigidity member 40 is provided with an arrangement space in which the vertical extension part 20A of the reinforcement member 20 can be arranged between the first air guiding part 40A and the second air guiding part 40B. The low-rigidity member 40 receives the vertical extension part 20A into the arrangement space, thereby being arranged to avoid the region corresponding to the sensor device S in planar view when seen from one side in the vehicle front-rear direction.

Referring to Figures 7 to 9, the low-rigidity member 40 is connected to and supported by the first vehicle body structural member 31 and the second vehicle body structural member 32. In the present embodiment, the low-rigidity member 40 is coupled to and supported by the first lower cross member 312 with respect to the first vehicle body structural member 31. The low-rigidity member 40 is coupled to the upper portion 32a of the second vehicle body structural member 32 via the protruding brackets 37 with respect to the second vehicle body structural member 32. To be specific, the rear end of the upper portion of the low-rigidity member 40 (rear end of a support part 42 described later in detail) is coupled to the vertical wall 312a (in detail, the bulging vertical wall 312a1) facing the forward direction of the first lower cross member 312 with respect to the first vehicle body structural member 31. The lower portion of the low-rigidity member 40 is coupled to the protruding brackets 37, thereby being coupled to the upper portion 32a of the second vehicle body structural member 32.

The low-rigidity member 40 includes a facing part 41. In the present embodiment, the low-rigidity member 40 includes the support part 42 and a deformable portion 43 in addition to the facing part 41.

The facing part 41 is arranged in a state of being in contact with or having a predetermined gap from (i.e., being in close proximity to) a predetermined vehicle inner side portion 24 (portion 24 inward side the vehicle) of the reinforcement member 20, which faces the inward side of the vehicle in the vehicle front-rear direction. In other words, the facing part 41 is a contacting or contactable portion facing the predetermined vehicle inner side portion 24 on the back surface side of the reinforcement member 20 in a state in which the facing part 41 contacts in advance or may contact, in the event of a collision, the reinforcement member 20 from the rear. The facing part 41 is arranged at a position offset with respect to the sensor device S in at least one of the vehicle up-down direction and the vehicle width direction.

In the illustrated example, in the vertical extension part 20A, the upper portion of the rear end of the first vertical side part 22a and the upper portion of the rear end of the second vertical side part 22b are set as the predetermined vehicle inner side portion 24 of the reinforcement member 20. The facing part 41 of the low-rigidity member 40 is formed as a wall that contacts or is contactable with the upper portion of the rear end of each vertical side part (22a, 22b) as the vehicle inner side portion 24 and has a surface facing the forward direction of the vehicle.

The support part 42 is a portion that extends in the vehicle front-rear direction to support the facing part 41. The support part 42 has one end to be connected to the facing part 41 and the other end to be connected to the vehicle body structure 30. In the illustrated example, a front end that is the one end of the support part 42 is connected to the back surface of the facing part 41. A rear end that is the other end of the support part 42 is coupled to and connected to the front portion of the first vehicle body structural member 31, and in detail, the vertical wall 312a facing the forward direction of the first lower cross member 312.

In the present embodiment, a projected area of the support part 42 onto a virtual vertical plane is smaller than a projected area of the facing part 41 onto a virtual vertical plane. That is, since the support part 42 has a spread mainly in the vehicle width direction and the vehicle front-rear direction and the facing part 41 has a spread mainly in the vehicle width direction and the vehicle up-down direction, the area of the support part 42 when seen from one side in the vehicle front-rear direction is smaller than the area of the facing part 41 when seen from one side in the vehicle front-rear direction.

In the present embodiment, the support part 42 is arranged on the outward side of the vehicle with respect to at least parts of the cross member coupling parts 313 in the vehicle front-rear direction. That is, at least parts of cross member coupling parts 313 are arranged on the inward side of the vehicle with respect to the support part 42 in the vehicle front-rear direction. In the illustrated example, among the three cross member coupling parts 313, the cross member coupling part 313 at the center in the vehicle width direction is arranged at the rear of (directly behind) the support part 42.

In the illustrated example, the other end (here, the rear end) of the support part 42 includes a recess 42a that is recessed along the bulging vertical wall 312a1 of the first lower cross member 312. The recess 42a is provided in a flange 423 (described later) including the rear end of the support part 42. The recess 42a (flange 423) at the rear end of the support part 42 is coupled to the bulging vertical wall 312a1 in a state in which the recess 42a is fitted to the bulging vertical wall 312a1 of the first lower cross member 312.

In the present embodiment, the support part 42 includes a support part main body 421, an extension piece 422, the flange 423, and a plate-shaped connection rib 424.

The support part main body 421 is a portion forming the majority of the support part 42, and extends in the vehicle width direction and the vehicle front-rear direction. The facing part 41 is connected to a front end of the support part main body 421.

The extension piece 422 is a portion extending to the outward side in the vehicle width direction with respect to the vehicle inner side portion 24 of the reinforcement member 20 and a portion extending to the outside of the vehicle in the vehicle front-rear direction. In the illustrated example, the extension piece 422 is continuous to each side in the vehicle width direction of the support part main body 421 and extends to the outside in the vehicle width direction and in the forward direction. In the present embodiment, the extension piece 422 extends to a position adjacent to the outside in the vehicle width direction with respect to the protruding part (23a, 23b) of the reinforcement member 20.

The flange 423 is formed at the other end (here, the rear end) of the support part 42 and extends in the upward direction of the vehicle. In the illustrated example, the flange 423 extends upward from the rear end of the support part main body 421.

The connection rib 424 is formed on an upper surface of the support part 42 (the support part main body 421), and extends in the vehicle front-rear direction along the upper surface and connects the flange 423 and the facing part 41. To be specific, a plurality of (in the drawing, five) connection ribs 424 are provided on the upper surface of the support part main body 421 so as to be spaced apart from each other.

The deformable portion 43 is a portion that is arranged at a position avoiding the reinforcement member 20 in planar view when seen from one side in the vehicle front-rear direction. The deformable portion 43 has a leading end (deformable portion leading end) located on the outward side of the vehicle with respect to the facing part 41 in the vehicle front-rear direction. In the illustrated example, each of the first air guiding part 40A and the second air guiding part 40B forms the deformable portion 43.

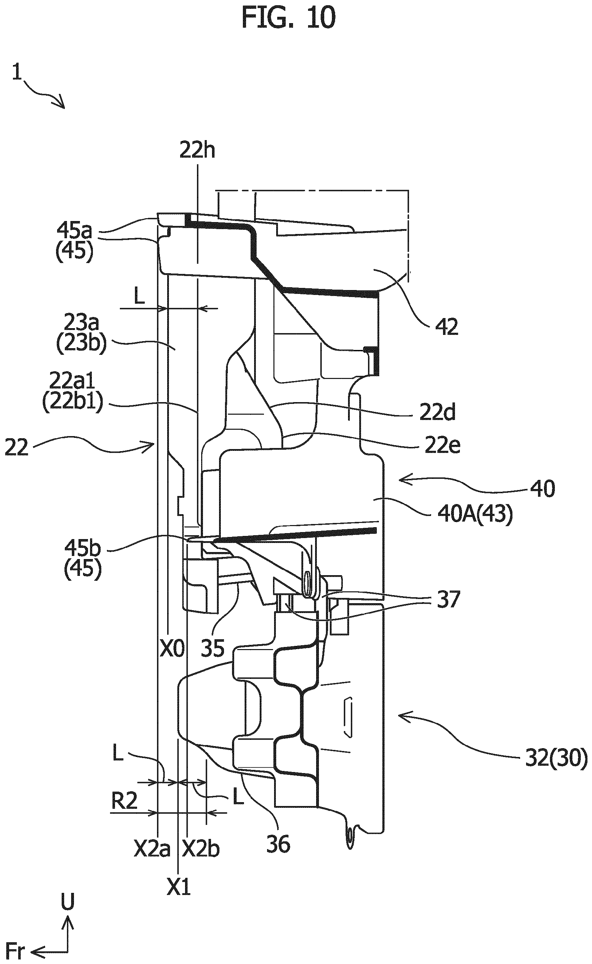

Next, regarding the sensor device S, the reinforcement member 20, the vehicle body structure 30, and the low-rigidity member 40, the positional relationship in the vehicle front-rear direction will be mainly described in detail. Figure 10 is an enlarged view of a lower portion of Figure 9 and an enlarged sectional view of the main part for explaining a front-rear positional relationship among elements.

Referring to Figures 7 to 10, the deformable portion 43 (the first air guiding part 40A, the second air guiding part 40B) of the low-rigidity member 40 includes an input part 45 from which an impact load can be input. The input part 45 is located at a position corresponding to the containing part end surface 22h of the containing part 22 or the sensor end surface Sa, or is located on the outward side of the vehicle with respect to the containing part end surface 22h or the sensor end surface Sa. In the illustrated example, the containing part end surface 22h is located in front of the sensor end surface Sa. Therefore, the input part 45 is located at a position corresponding to the containing part end surface 22h (position coinciding with or substantially coinciding with the front-back position of the containing part end surface 22h) of the containing part 22, or is located on the outward side of the vehicle with respect to the containing part end surface 22h.

In the present embodiment, the input part 45 includes a first input part 45a and a second input part 45b. The first input part 45a forms a leading end on the outward side of the vehicle of the extension piece 422. The second input part 45b is located at a position adjacent to the outside in the vehicle width direction with respect to the containing part 22 of the reinforcement member 20. In the illustrated example, in the input part 45, the first input part 45a is located on the outward side (in the forward direction) of the vehicle with respect to the containing part end surface 22h in the vehicle front-rear direction, and the second input part 45b is located at a position corresponding to (coinciding with or substantially coinciding with) the containing part end surface 22h in the vehicle front-rear direction.

Referring to Figure 5, in the present embodiment, a protruding leading end X1 (i.e., a leading end on the outward side of the vehicle, and for that matter, the front end) of the panel impact absorbing part 36 and a protruding leading end X0 of the protruding part (23a, 23b) are located in a predetermined very small range R1 in the vehicle front-rear direction. That is, the position of the protruding leading end X1 of the panel impact absorbing part 36 and the position of the protruding leading end X0 of the protruding part (23a, 23b) are in close proximity to each other in the vehicle front-rear direction. In the illustrated example, the protruding leading end X1 of the panel impact absorbing part 36 is located slightly rearward with respect to the protruding leading end X0 of the protruding part (23a, 23b) in the vehicle front-rear direction. Although not limited in particular, the front end in the predetermined very small range R1 is located at a position separated forward from the protruding leading end X0 of the protruding part (23a, 23b) by a protruding length L in the front-rear direction of the protruding part (23a, 23b), and the rear end in the predetermined very small range R1 is located at a position separated rearward from the protruding leading end X0 of the protruding part (23a, 23b) by a protruding length L. That is, the protruding leading end X1 of the panel impact absorbing part 36 is provided, in the vehicle front-rear direction, at a predetermined position in the very small range R1 corresponding to a protruding length L of the protruding part (23a, 23b) on each side in the vehicle front-rear direction from the protruding leading end X0 of the protruding part (23a, 23b). Note that the entire width in the front-rear direction of the predetermined very small range R1 may be a length corresponding to the protruding length L of the protruding part (23a, 23b). The protruding leading end X1 of the panel impact absorbing part 36 may be located, in the vehicle front-rear direction, slightly rearward with respect to the protruding leading end X0 of the protruding part (23a, 23b) or may coincide with the protruding leading end X0.

In the present embodiment, the protruding leading end X1 of the panel impact absorbing part 36 is set on the outward side of the vehicle with respect to the containing part end surface 22h in the vehicle front-rear direction. In the illustrated example, the position of the protruding leading end X1 of the panel impact absorbing part 36 is set between the containing part end surface 22h and the protruding leading end X0 of the protruding part (23a, 23b) in the vehicle front-rear direction.

Referring to Figure 10, in the present embodiment, the protruding leading end X1 of the panel impact absorbing part 36 and a leading end (X2a, X2b) on the outward side of the vehicle in the vehicle front-rear direction of the input part 45 (the first input part 45a, the second input part 45b) are located in a predetermined very small range R2 in the vehicle front-rear direction. That is, the position of the protruding leading end X1 of the panel impact absorbing part 36 and the position of the leading end (X2a, X2b) on the outward side of the vehicle that is a front end of the input part 45 (the first input part 45a, the second input part 45b) are in close proximity to each other in the vehicle front-rear direction. In the illustrated example, in the vehicle front-rear direction, the protruding leading end X1 of the panel impact absorbing part 36 is located rearward with respect to the leading end X2a on the outward side of the vehicle of the first input part 45a, and is located slightly forward with respect to the leading end X2b on the outward side of the vehicle of the second input part 45b. Although not limited in particular, the front end in the predetermined very small range R2 is located at a position separated forward from the protruding leading end X1 of the panel impact absorbing part 36 by a protruding length L in the front-rear direction of the protruding part (23a, 23b), and the rear end in the predetermined very small range R2 is located at a position separated rearward from the protruding leading end X1 by a protruding length L.

As indicated by dash-double-dot line in Figure 3, in a case in which a virtual line extending to the inside in the vehicle width direction along the end surface (front end surface) on the outward side of the vehicle in the vehicle front-rear direction of the panel impact absorbing part 36 is referred to as a first virtual line W1, and a virtual line extending to the inside in the vehicle width direction along the end surface (front end surface) on the outward side of the vehicle in the vehicle front-rear direction of the low-rigidity member 40 is referred to as a second virtual line W2, the second virtual line W2 is located on the inward side of the vehicle with respect to the first virtual line W1 in the vehicle front-rear direction. The containing part 22 (in detail, the containing part end surface 22h) is located on the inward side of the vehicle with respect to (at the rear of) any one of the first virtual line W1 and the second virtual line W2 in the vehicle front-rear direction. In the illustrated example, although the front end surface of the panel impact absorbing part 36 is formed as a flat surface, the present invention is not limited thereto, and the front end surface thereof may be formed as a gently curved surface protruding forward. In this case, the first virtual line W1 extends in an arc shape with a curvature of the front end surface of the panel impact absorbing part 36, and the arc-shaped first virtual line W1 is located in front of the second virtual line W2.

In the present embodiment, the extension piece 422 of the low-rigidity member 40 extends toward the outward side of the vehicle in the vehicle front-rear direction so as to be separated from a center line W3 extending in the vehicle front-rear direction through a center in the vehicle width direction of the low-rigidity member 40. In Figure 3, an extending direction W4 of the extension piece 422 is indicated by a broken line, and the center line W3 is indicated by a dash-dot line.

In the present embodiment, a normal direction W5 of the end surface on the outward side of the vehicle (front end surface) of the panel impact absorbing part 36 extends in parallel to the extending direction W4 of the extension piece 422. Since the second vehicle body structural member 32 is gently curved in a bow shape protruding forward, the normal direction W5 of the front end surface of the panel impact absorbing part 36 provided along the front surface of the curved second vehicle body structural member 32 is slightly inclined with respect to the center line W3 extending in the front-rear direction. The inclined normal direction W5 (in other words, a direction of attaching to the second vehicle body structural member 32 of the panel impact absorbing part 36) coincides with the extending direction W4 of the extension piece 422.

According to the vehicle structure 1 according to the present embodiment configured as described above, the low-rigidity member 40 having a rigidity lower than the rigidity of the vehicle body structure 30 is arranged in the periphery of the reinforcement member 20, and the low-rigidity member 40 includes the facing part 41 that is arranged in a state of being in contact with or having a predetermined gap from a predetermined vehicle inner side portion 24 of the reinforcement member 20 facing the inward side of the vehicle in the vehicle front-rear direction. As a result, the displacement toward the inward side of the vehicle (rearward) of the reinforcement member 20 immediately after a front collision or a rear collision (in the present embodiment, a front collision) of the vehicle is regulated by the facing part 41 of the low-rigidity member 40. The impact load input to the facing part 41 is effectively absorbed as deformation energy in the periphery of the facing part 41 of the low-rigidity member 40, whereby the impact energy can be effectively absorbed. Since the facing part 41 is arranged at a position offset with respect to the sensor device S in at least one of the vehicle up-down direction and the vehicle width direction, a space is secured to allow deformation of a portion of the reinforcement member 20 and in the vicinity of the sensor device toward the inward side of the vehicle (rearward). As a result, even when the portion of the reinforcement member 20 and in the vicinity of the sensor device is deformed toward the inward side of the vehicle (rearward) in the event of a collision, the damage to the sensor device S caused by the deformation of the reinforcement member 20 toward the inward side of the vehicle can be effectively reduced. That is, in the event of a collision, the damage to the sensor device S caused by, for example, being sandwiched between the outer panel 10 and the facing part 41 can be effectively reduced.

In this way, the vehicle structure 1 according to the present embodiment is a vehicle structure which makes it possible to efficiently absorb impact energy and improve protection performance of the sensor device S.

In the present embodiment, since the low-rigidity member 40 is arranged to avoid the region corresponding to the sensor device S in planar view when seen from one side in the vehicle front-rear direction, the sensor device S can be prevented from being sandwiched between the outer panel 10 and the low-rigidity member 40 in the event of a collision.

In the present embodiment, the impact load input to the facing part 41 in the event of a collision is transmitted to the support part 42 that extending in the vehicle front-rear direction and supports the facing part 41. Since the support part 42 has one end to be connected to the facing part 41 and the other end to be connected to the vehicle body structure 30, at least part of the impact load transmitted to the support part 42 can be transmitted to the vehicle body structure 30. Therefore, the impact load can be dispersed so that the impact load can be also absorbed as the deformation energy of another member different from the low-rigidity member 40.

In the present embodiment, since a projected area of the support part 42 onto a virtual vertical plane is smaller than a projected area of the facing part 41 onto a virtual vertical plane, the impact load input to the vehicle in the event of a collision can be easily input to the facing part 41 and the impact load effectively input makes it possible to promote the deformation and breakage of the support part 42. As a result, the impact energy can be effectively absorbed as the deformation energy of the support part 42.

In the present embodiment, the reinforcement member 20 is coupled to the first upper cross member 311 with respect to the first vehicle body structural member 31, and the low-rigidity member 40 is coupler to the first lower cross member 312 with respect to the first vehicle body structural member 31. As a result, the impact load input to the reinforcement member 20 and the low-rigidity member 40 in the event of a collision can be dispersed vertically in the first vehicle body structural member 31.

In the present embodiment, since the first upper cross member 311 and the first lower cross member 312 are coupled by the cross member coupling parts 313, the impact load is also dispersed between the first upper cross member 311 and the first lower cross member 312 via the cross member coupling parts 313. The rigidity of the first vehicle body structural member 31 can be improved by the cross member coupling parts 313 during the normal use. As a result, during the normal use, the change in the orientation of the sensor device S can be effectively reduced and the sensor sensing accuracy can be effectively maintained.

In the present embodiment, at least parts of cross member coupling parts 313 are arranged on the inward side of the vehicle with respect to (here, at the rear of) the support part 42 in the vehicle front-rear direction. As a result, a transmission path of the impact load via the reinforcement member 20, the facing part 41, the support part 42, the first lower cross member 312, the cross member coupling parts 313, and the first upper cross member 311 is formed, whereby the impact load can be effectively dispersed.

In the present embodiment, the deformable portion 43 includes the deformable portion 43 that is arranged at a position avoiding the reinforcement member 20 in planar view when seen from one side in the vehicle front-rear direction. The deformable portion 43 has a leading end located on the outward side of the vehicle with respect to the facing part 41 in the vehicle front-rear direction. As a result, in the event of a collision, the impact energy can be transmitted to the leading end of the deformable portion 43, and can be effectively absorbed as the deformation energy of the deformable portion 43.

In the present embodiment, the deformable portion 43 includes the input part 45 (the first input part 45a, the second input part 45b) which is located at a position corresponding to the containing part end surface 22h or the sensor end surface Sa, or is located on the outward side of the vehicle with respect to the containing part end surface 22h or the sensor end surface Sa, in the vehicle front-rear direction. The transmission of the impact load to the sensor device S can be reduced, the protection of the sensor device S can be improved, and the absorption of the impact energy caused by the deformation of the low-rigidity member 40 can be promoted.

In the present embodiment, the support part 42 includes the extension pieces 422 extending to the outside in the vehicle width direction with respect to the vehicle inner side portion 24 of the reinforcement member 20. The extension pieces 422 extends to the outward side of the vehicle in the vehicle front-rear direction, and the input part 45 includes the first input part 45a forming the leading end on the outward side of the vehicle of the extension piece 422. As a result, a transmission path of the impact load via the first input part 45a, the support part 42, and the vehicle body structure 30 (the first lower cross member 312) is formed at a relatively short distance in the vehicle front-rear direction, whereby the impact load can be effectively dispersed by the transmission.

In the present embodiment, since the input part 45 includes the second input part 45b located at a position adjacent to the outside in the vehicle width direction with respect to the containing part 22, the input of the impact load to the containing part 22 for the sensor device S can be reduced and the protection of the sensor device S can be effectively improved.

In the present embodiment, in a case in which a virtual line extending to the inside in the vehicle width direction along the end surface on the outward side of the vehicle in the vehicle front-rear direction of the panel impact absorbing part 36 is referred to as a first virtual line W1, and a virtual line extending to the inside in the vehicle width direction along the end surface on the outward side of the vehicle in the vehicle front-rear direction of the low-rigidity member 40 is referred to as a second virtual line W2, the second virtual line W2 is located on the inward side of the vehicle with respect to the first virtual line W1 in the vehicle front-rear direction, and the containing part 22 is located on the inward side of the vehicle with respect to any one of the first virtual line W1 and the second virtual line W2 also in the vehicle front-rear direction. As a result, in the event of a collision, before the impact energy is transmitted to the containing part 2, a part of the impact energy can be reliably absorbed as the deformation energy of the panel impact absorbing part 36 and the deformation energy of the low-rigidity member 40, and the impact load to be transmitted to the containing part 22 can be reduced.

In the present embodiment, since the second vehicle body structural member 32 is provided with the panel impact absorbing part 36 that protrudes from the second vehicle body structural member 32 toward the outward side of the vehicle in the vehicle front-rear direction and is formed to have a rigidity lower than the rigidity of the second vehicle body structural member 32, the impact load can be transmitted to the panel impact absorbing part 36 and dispersed so that the impact energy can be effectively absorbed.

In the present embodiment, since the protruding leading end X1 of the panel impact absorbing part 36 is set on the outward side of the vehicle with respect to the containing part end surface 22h in the vehicle front-rear direction, in the event of a collision, the panel impact absorbing part 36 can receive the impact load earlier than the peripheral portion of the sensor device S, which makes it possible to improve protection performance of the sensor device S.

In the present embodiment, the protruding leading end X1 of the panel impact absorbing part 36 and a leading end (X2a, X2b) on the outward side of the vehicle in the vehicle front-rear direction of the input part 45 (the first input part 45a, the second input part 45b) are located in a predetermined very small range R2 in the vehicle front-rear direction. In the event of a collision, the impact load can be effectively dispersed by the panel impact absorbing part 36 and the input part 45, and the absorption of the impact energy can be promoted.

In the present embodiment, since the protruding part (23a, 23b) projects to the outward side of the vehicle with respect to the containing part 22 in the vehicle front-rear direction, in the event of a collision, the transmission of the impact load to the sensor device S can be reduced. Before the impact load is input to the sensor device S, at least part of the impact energy can be absorbed as the deformation energy of the protruding part (23a, 23b). As a result, the protection performance of the sensor device S can be improved.

In the present embodiment, since the protruding part (23a, 23b) is arranged at a position offset with respect to the sensor device S in at least one of the vehicle up-down direction and the vehicle width direction, it becomes difficult to transmit the impact load transmitted to the protruding part (23a, 23b) to the sensor device S. As a result, the protection performance of the sensor device S can be improved.

In the present embodiment, the extension piece 422 extends to a position adjacent to the outside in the vehicle width direction with respect to the protruding part (23a, 23b), and the first input part 45a forms the leading end on the outward side of the vehicle of the extension piece 422. As a result, in the transmission path of the impact load via the first input part 45a, the support part 42, and the vehicle body structure 30 (the first lower cross member 312), the impact load is input also via the protruding part (23a, 23b). Therefore, the impact load can be further effectively dispersed by being transmitted to the first lower cross member 312.

In the present embodiment, the second vehicle body structural member 32 is provided at a position offset toward the outward side of the vehicle with respect to the first vehicle body structural member 31 in the vehicle front-rear direction, and the low-rigidity member 40 is coupled to the second vehicle body structural member 32. As a result, the impact load transmitted to the low-rigidity member 40 can be dispersed not only to the first vehicle body structural member 31 (here, the first lower cross member 312) but also to the second vehicle body structural member 32, the impact load can be effectively dispersed in the up-down direction, and the impact energy can be more effectively absorbed.

In the present embodiment, the second vehicle body structural member 32 is provided with the protruding brackets 37 that protrudes upward from the second vehicle body structural member 32 and is formed to have a rigidity lower than the rigidity of the second vehicle body structural member 32, and the low-rigidity member 40 is coupled to the second vehicle body structural member 32 via the protruding brackets 37. As a result, when the impact load is transmitted from the low-rigidity member 40 to the second vehicle body structural member 32, at least part of the impact energy can be absorbed to the deformation energy of the protruding brackets 37.

In the present embodiment, the extension piece 422 extends toward the outward side of the vehicle in the vehicle front-rear direction so as to be separated from the center line W3 extending in the vehicle front-rear direction through a center in the vehicle width direction of the low-rigidity member 40. As a result, in a case in which the impact load is input from the outside in the vehicle width direction, the impact load is easily transmitted to the center side in the vehicle width direction via the inclined extension piece 422, and the impact load is easily transmitted to the vehicle body structure 30 (the first lower cross member 312 and the like) via the transmission path via the support part 42.

In the present embodiment, the normal direction W5 of the end surface on the outward side of the vehicle (here, the front end surface) of the panel impact absorbing part 36 extends in parallel to the extending direction W4 of the extension piece 422. As a result, the impact load can be transmitted in the same direction relatively without fluctuation in the input of the impact load to the panel impact absorbing part 36 and the input of the impact load to the extension piece 422.

In the present embodiment, the vertical wall 312a that faces the outward side of the vehicle in the vehicle front-rear direction of the first lower cross member 312 and extends in the vehicle width direction includes, at the center in the vehicle width direction of the vertical wall 312a, the bulging vertical wall 312a1 that bulges toward the outward side of the vehicle in the vehicle front-rear direction, and the other end (here, the rear end) of the support part 42 includes the recess 42a that is recessed along the bulging vertical wall 312a1. As a result, the contact area between the support part 42 and the first lower cross member 312 can be increased, and the impact load from the support part 42 to the first lower cross member 312 can be further effectively dispersed.

In the present embodiment, the flange 423 extending in the upward direction of the vehicle is formed at the other end (rear end) of the support part 42, and the plate-shaped connection rib 424 is formed on an upper surface of the support part 42 to extend in the vehicle front-rear direction along the upper surface and connect the flange 423 and the facing part 41. As a result, the transmission of the impact load to the support part 42 makes it easy for the impact load to be more effectively dispersed to the connection rib 424, and when the impact load is large, the impact energy can be absorbed by the deformation of the plate-shaped connection rib 424.

The reinforcement member 20 includes the vertical extension part 20A and the transverse extension part 20B having a projecting part 21 at each side in the vehicle width direction. As a result, in the event of a front collision or a rear collision of the vehicle (in the present embodiment, the front collision), the impact load input to the vehicle is dispersed in the vehicle width direction by the transverse extension part 20B having the projecting part 21 extending in the vehicle width direction to be input to the reinforcement member 20, whereby the impact load can be prevented from locally concentrating at and being input to the reinforcement member 20. Therefore, the input impact load is effectively absorbed as deformation energy of the reinforcement member 20 and the like, whereby the impact energy can be effectively absorbed. During the normal use, the twisting deformation in which the reinforcement member 20 is twisted around the vertical extension part 20A can be effectively reduced. As a result, during the normal use, the change in the orientation of the sensor device S can be effectively reduced and the sensor sensing accuracy can be effectively maintained.

Although an embodiment of the present invention has been described, the present invention is not limited to the embodiment and further modification and changes on the basis of the technical concept of the present invention are possible.

For example, in the present embodiment, the other end (here, the rear end) of the support part 42 is connected to the vehicle body structure 30, but the present invention is not limited thereto, and the other end need not be connected to the vehicle body structure 30. It is only required that the other end of the support part 42 be arranged so that the input impact load can be transmitted to the vehicle body structure 30, and the other end contact the vehicle body structure 30 from the outward side of the vehicle. To be specific, it is only required that the flange 423 including the rear end of the support part 42 contact the vertical wall 312a of the first lower cross member 312 from the front. That is, the support part 42 has one end to be connected to the facing part 41 and the other end to be connected to the vehicle body structure 30 or to be in contact with the vehicle body structure 30 from the outward side of the vehicle.

In the present embodiment, in the explanation of each element, one side of the vehicle up-down direction refers to the upper side of the vehicle up-down direction, but the present invention is not limited thereto. One side of the vehicle up-down direction may refer to the lower side of the vehicle up-down direction. In this case, the transverse extension part 20B of the reinforcement member 20 is located on the lower side of the vertical extension part 20A in the vehicle up-down direction, the projecting part 21 projects from the lower end side of the vertical extension part 20A toward the outside in the vehicle width direction, the reinforcement member 20 is formed substantially into an inverted T-shape in planar view, the position relationship between the first vehicle body structural member 31 and the second vehicle body structural member 32 is reversed, and the sensor device S is contained inside the containing part 22 in the upper part of the reinforcement member 20.

The outer panel 10 is a front bumper having the front grille 11a, but the present invention is not limited thereto. The outer panel 10 may be, for example, a front bumper having no front grille 11a or only the front grille 11a, or a decorative member (e.g., a metal-like member).

The sensor device S is not limited to a radar using millimeter waves or microwaves, it is only required that the sensor device S be a device that senses the outside-vehicle environment, and the sensor device S may be an ultrasound sensor that senses the outside-vehicle environment with ultrasound or an imaging device such as a camera that senses the outside-vehicle environment by capturing an image. The sensing wave passing region 12 of the outer panel 10 may be simply a through hole (opening).

In the present embodiment, the vehicle structure 1 is applied as a front structure of the vehicle, but the present invention is not limited thereto. The attachment site of the sensor device S is not limited to the front part of the vehicle, may be the rear part of the vehicle or the side part of the vehicle in some cases, and the vehicle structure 1 may be applied as the rear structure of the vehicle. In a case of the rear structure, the outer panel 10 is, for example, a rear bumper, a rear grille, a back panel, a rear door panel, or the like.

### [Reference Signs List]

- 1: vehicle structure
- 10: outer panel
- 11: bumper front surface
- 11a: front grille
- 12: sensing wave passing region
- 20: reinforcement member
- 20A: vertical extension part
- 20B: transverse extension part
- 21: projecting part
- 21a: upper wall
- 21b: front wall
- 21c: front wall
- 22: containing part
- 22a: first vertical side part (vertical side part)
- 22a1: first end wall (end wall)
- 22b: second vertical side part (vertical side part)
- 22b 1: second end wall (end wall)
- 22c: upper connecting wall
- 22d: first front and rear wall
- 22e: bottom wall
- 22e1: harness insertion port
- 22f: second front and rear wall
- 22g: bulging part
- 22h: containing part end surface
- 23a: protruding part
- 23b: protruding part
- 24: predetermined vehicle inner side portion
- 30: vehicle body structure
- 31: first vehicle body structural member
- 311: first upper cross member
- 312: first lower cross member
- 313: cross member coupling part
- 312a: vertical wall
- 312a1: bulging vertical wall
- 32: second vehicle body structural member
- 32a: upper portion
- 33: inner impact absorbing part (upper bracket)
- 33a: impact absorbing piece
- 34: coupling stay
- 35: support bracket (lower bracket)
- 36: panel impact absorbing part
- 37: protruding bracket
- 40: low-rigidity member
- 40A: first air guiding part
- 40B: second air guiding part
- 40C: central connection part
- 41: facing part
- 42: support part
- 42a: recess
- 421: support part main body
- 422: extension piece
- 423: flange
- 424: connection rib
- 43: deformable portion
- 45: input part
- 45a: first input part
- 45b: second input part
- C: sensor fixing part
- L: protruding length of protruding part
- R1: predetermined very small range
- R2: predetermined very small range
- S: sensor device
- Sa: sensor end surface
- X0: protruding leading end of protruding part
- X1: protruding leading end of panel impact absorbing part
- X2a: leading end on outward side of vehicle of first input part
- X2b: leading end on outward side of vehicle of second input part
- V1: lower region
- V2: lower region
- W1: first virtual line
- W2: second virtual line
- W3: center line
- W4: extending direction
- W5: normal direction

## Claims

1. A vehicle structure comprising:
an outer panel that forms a design surface of an outside of a vehicle in a front part or a rear part of the vehicle;
a reinforcement member that reinforces the outer panel from a back surface side of the outer panel;
a sensor device that is attached to the reinforcement member and senses an outside-vehicle environment; and
a vehicle body structure that is provided on the back surface side of the outer panel and extends in a vehicle width direction, **characterized in that**
the vehicle structure includes a low-rigidity member that is arranged in a periphery of the reinforcement member and has a rigidity lower than a rigidity of the vehicle body structure,
the low-rigidity member has a facing part that is arranged in a state of being in contact with or having a predetermined gap from a predetermined vehicle inner side portion of the reinforcement member, the vehicle inner side portion facing an inward side of the vehicle in a vehicle front-rear direction, and
the facing part is arranged at a position offset with respect to the sensor device in at least one of a vehicle up-down direction and a vehicle width direction.

2. The vehicle structure according to claim 1, wherein
the low-rigidity member is arranged to avoid a region corresponding to the sensor device in planar view when seen from one side in the vehicle front-rear direction.

3. The vehicle structure according to claim 1, wherein
the low-rigidity member includes a support part that extends in the vehicle front-rear direction and supports the facing part, and has one end to be connected to the facing part and the other end to be connected to the vehicle body structure or to be in contact with the vehicle body structure from an outward side of the vehicle.

4. The vehicle structure according to claim 3, wherein
a projected area of the support part onto a virtual vertical plane is smaller than a projected area of the facing part onto a virtual vertical plane.

5. The vehicle structure according to claim 1, wherein
the vehicle body structure includes a first vehicle body structural member and a second vehicle body structural member arranged to be spaced apart from the first vehicle body structural member from a lower side in the vehicle up-down direction,
the first vehicle body structural member includes a first upper cross member and a first lower cross member arranged on a lower side of the first upper cross member in the vehicle up-down direction,
the reinforcement is coupled to the first upper cross member with respect to the first vehicle body structural member, and
the low-rigidity member is coupled to the first lower cross member with respect to the first vehicle body structural member.

6. The vehicle structure according to claim 5, further comprising:
a cross member coupling part that couples the first upper cross member and the first lower cross member.

7. The vehicle structure according to claim 6, wherein
the low-rigidity member includes a support part that extends in the vehicle front-rear direction and supports the facing part, and has one end to be connected to the facing part and the other end to be connected to the first lower cross member, and
at least part of the cross member coupling part is arranged on an inward side of a vehicle with respect to the support part in the vehicle front-rear direction.

8. The vehicle structure according to claim 1, wherein
the low-rigidity member includes a deformable portion that is arranged at a position avoiding the reinforcement member in planar view when seen from one side in the vehicle front-rear direction, and has a leading end located on the outward side of the vehicle with respect to the facing part in the vehicle front-rear direction.

9. The vehicle structure according to claim 8, wherein
the reinforcement member includes a containing part in which the sensor device is contained,
the containing part has a containing part end surface located at a leading end on the outward side of the vehicle in the vehicle front-rear direction in the containing part,
the sensor device has a sensor end surface located at a leading end on the outward side of the vehicle in the vehicle front-rear direction in the sensor device, and
the deformable portion includes an input part that is located at a position corresponding to the containing part end surface or the sensor end surface, or is located on the outward side of the vehicle with respect to the containing part end surface or the sensor end surface.

10. The vehicle structure according to claim 9, wherein
the low-rigidity member includes a support part that extends in the vehicle front-rear direction and supports the facing part, and has one end to be connected to the facing part and the other end to be connected to the vehicle body structure,
the support part includes an extension piece that extends to an outward side in the vehicle width direction with respect to the vehicle inner side portion of the reinforcement member, and extends to the outward side of the vehicle in the vehicle front-rear direction, and
the input part includes a first input part that forms a leading end on the outside of the vehicle of the extension piece.

11. The vehicle structure according to claim 9, wherein
the input part includes a second input part located at a position adjacent to the outside in the vehicle width direction with respect to the containing part.

12. The vehicle structure according to claim 1, wherein
the reinforcement member includes a containing part in which the sensor device is contained,
the vehicle body structure is provided with a panel impact absorbing part that protrudes from the vehicle body structure toward the outward side of the vehicle in the vehicle front-rear direction and is formed to have a rigidity lower than a rigidity of the vehicle body structure,
in a case in which a virtual line extending to the inside in the vehicle width direction along an end surface on the outward side of the vehicle in the vehicle front-rear direction of the panel impact absorbing part is referred to as a first virtual line, and a virtual line extending to the inside in the vehicle width direction along an end surface on the outward side of the vehicle in the vehicle front-rear direction of the low-rigidity member is referred to as a second virtual line,
the second virtual line is located on the inward side of the vehicle with respect to the first virtual line in the vehicle front-rear direction, and
the containing part is located on the inward side of the vehicle with respect to any one of the first virtual line and the second virtual line in the vehicle front-rear direction.
